# EUROPÄISCHE PATENTSCHRIFT

(11) **EP 0 839 379 B1**
(45) Veröffentlichungstag und Bekanntmachung des Hinweises auf die Patenterteilung: **27.03.2002**
(21) Anmeldenummer: 96926365.6
(22) Anmeldetag: 18.07.1996
(51) Int. Cl.: H01F 41/02, H01F 27/25, B65H 54/28

(54) **VERFAHREN ZUM AUFWICKELN EINES ELEKTROBANDES ZU EINEM GROSSCOIL**
METHOD OF WINDING ELECTRIC TAPE TO GIVE A LARGE COIL
PROCEDE PERMETTANT D'ENROULER UNE BANDE ELECTRIQUE POUR FORMER UNE BOBINE DE GRANDE DIMENSION

(30) Priorität: 18.07.1995 DE 19526111; 12.10.1995 DE 19537996
(43) Veröffentlichungstag der Anmeldung: 06.05.1998
(73) Patentinhaber: C.D. WÄLZHOLZ PRODUKTIONS-GESELLSCHAFT MBH, D-58093 Hagen (DE)
(72) Erfinder: JUNIUS, Hans-Toni, D-58644 Iserlohn (DE)
(74) Vertreter: Behrendt, Arne, Dipl.-Ing.
(86) Internationale Anmeldenummer: EP9603172
(87) Internationale Veröffentlichungsnummer: WO9704471

(56) Entgegenhaltungen:
- EP-A- 0 023 391
- WO-A-84/02328
- DE-B- 1 181 816
- GB-A- 933 803
- US-A- 4 645 135
- PATENT ABSTRACTS OF JAPAN vol. 007, no. 250 (M-254), 8.November 1983 & JP,A,58 135067 (MATSUSHITA DENKI SANGYO KK), 11.August 1983,
- PATENT ABSTRACTS OF JAPAN vol. 006, no. 226 (E-141), 11.November 1982 & JP,A,57 128013 (TOKYO DENKI KAGAKU KOGYO KK), 9.August 1982,

## Beschreibung

Die Erfindung betrifft ein Verfahren zum verformungsfreien Aufwickeln von Elektroband zu einem Coil, sowie ein Coil aus aufgewickeltem Elektrobond.

Aus Elektrobändern werden z. B. die einzelnen Bleche der Kernpakete von Stromgeneratoren, Transformatoren, Elektromagneten und Elektromotoren gestanzt. Die Elektrobänder bestehen aus einem speziellen Stahl mit genau definierten mechanischen und elektromagnetischen Eigenschaften. Sie müssen nach Euronorm 10 106 im schlußgeglühten Zustand ausgeliefert werden.

Eine wichtige elektromagnetische Eigenschaft, die über die gesamte Länge und Breite des Elektrobandes gewährleistet sein muß, ist ein geringer und definierter Ummagnetisierungsverlust. Daneben sind die magnetische Polarisation sowie die mechanischen Eigenschaften wichtige werkstofftechnische Parameter.

Sind die Ummagnetisierungsverluste zu hoch, kommt es zu einer unerwünschten Verlustleistung, z. B. in Form von Erwärmung der aus diesem Elektroblech hergestellten Kernpakete. Diese Erwärmung beruht im wesentlichen auf Wirbelströmen, die bei der Ummagnetisierung im magnetischen Wechselfeld im Blechpaket entstehen. Diese Wirbelstromverluste sind am geringsten, wenn das für das Elektroblech verwendete Material eine bestimmte kristallographische Orientierung, nämlich die sogenannte Würfeltextur hat. Wird diese bei der Herstellung des Elektrobandes durch geeignete Maßnahmen erzeugte Würfeltextur gestört, so verliert das Material zumindest in diesem gestörten Bereich die geforderten elektromagnetischen Eigenschaften.

Schon geringste Verformungen bewirkten im Material Texturveränderungen und damit eine Erhöhung der Versetzungsdichte, die sich in erheblich schlechteren Ummagnetisierungswerten darstellt. Zur Vermeidung von solchen schädlichen Verformungen müssen Zugspannungen und Biegespannungen in der Nähe der Streckgrenze während des gesamten Bearbeitungsvorganges vermieden werden. So muß z. B. die Zugkraft in der Scherenanlage minimal gehalten werden. Ebenso darf der Biegeradius an allen Umlenkungen nicht unterhalb eines kritischen Biegeradius liegen, der zu bleibenden Biegeverformungen führt.

Um die bei der Herstellung des Elektrobandes erzeugte Textur des Materials auch nachfolgend beim Transport und der Weiterverarbeitung so wenig wie möglich zu beeinträchtigen, ist es bei den Elektrobandherstellern üblich, das Elektroband nach der Wärmebehandlung möglichst schonend zu behandeln und insbesondere starke Zugbelastungen und Biegungen von dem Material fernzuhalten. Aus diesem Grunde wird Elektroband nach dem Stande der Technik möglichst schonend und mit geringem Bandzug zu sogenannten Scheibencoils aufgewickelt, deren axiale Breite der Breite des Elektrobandes entspricht. Diese Scheibencoils werden meistens ohne Wickelkern gewickelt, können gegebenenfalls auch auf einen Wickelkern aufgewickelt sein, dessen Breite der Breite des Elektrobandes entspricht.

Diese schmalen Scheibencoils sind wegen ihrer besonderen geometrischen Form verhältnismäßig instabil, insbesondere wenn eine sehr große Bandlänge zu einem Scheibencoil großen Durchmessers aufgewickelt wird. Infolgedessen besteht die Gefahr, daß das Scheibencoil beim Transport oder bei der Weiterverarbeitung Beschädigungen erleidet und dadurch unbrauchbar wird. Durch eine Erhöhung des Bandzuges beim Wickeln erreicht man in dem zum Coil aufgewickelten Elektroband eine bleibende Zugspannung, die den Zusammenhalt der aufeinanderfolgenden Lagen des Coils verbessert und dadurch das Coil stabilisiert. Dieser Erhöhung der Zugspannung sind aber wegen der zu befürchtenden Texturveränderungen im Material enge Grenzen gesetzt. Deshalb muß man sich in der Praxis wohl oder übel mit verhältnismäßig kurzen Bandabschnitten auf jedem Scheibencoil begnügen.

Bei der Weiterverarbeitung wird das Elektroband von diesem Scheibencoil mittels besonderer Abwickelvorrichtungen abgewickelt und einer Stanzmaschine zugeführt. Wegen der begrenzten Länge des auf einem Scheibencoil befindlichen Elektrobandabschnittes müssen diese Scheibencoils verhältnismäßig oft gewechselt werden, was jeweils mit einem erheblichen Zeit- und Arbeitsaufwand und einem Maschinenstillstand verbunden ist, was einen Verlust an Produktivität bedeutet.

Nach dem Stande der Technik (vgl. WO 84/02328) ist es bekannt, Stahlband in aufeinanderfolgenden Lagen oszillierend zu einem Großcoil aufzuwickeln, dessen Wickelkern um eine Vielfaches breiter als das Band ist. Dieses vorbekannte Verfahren arbeitet mit einem Verlegerechner, der es ermöglichen soll, das Stahlband unter kontrollierbaren und reproduzierbaren Bedingungen in aufeinanderfolgenden, eng gewickelten Lagen oszillierend zu einem exakt zylindrischen Großcoil aufzuwickeln, wobei besondere Maßnahmen getroffen sind, die Umkehrpunkte des Wickelsinnes an den Stirnseiten des Coils gleichmäßig auf den Umfang zu verteilen, um hierdurch verursachte Abweichungen von der Zylinderform zu unterbinden.

Selbst wenn man bei dem aus der WO 84/02328 hervorgehenden Verfahren alle beim Aufwickeln auftretenden Biegeradien und Zugspannungen so einstellt, daß bleibende Verformungen in dem aufgewickelten Band ausgeschlossen werden, ist dieses Verfahren für das Aufwickeln von empfindlichen Elektroband zu einem Großcoil noch nicht geeignet, weil sich im Bereich der Enden des Coils, und zwar dort, wo im Bereich des letzten Ganges jeder Wickellage die Richtung des Wickelsinnes umgekehrt werden muß, Zwängungen und Verformungen ergeben, die die Textur des Elektrobandes nachhaltig beeinträchtigen.

Weiterhin ist aus der EP 0 023 391 A1 ein Wickelverfahren für das oszillierende Wickeln von Stahlband bekannt, bei dem der axiale Abstand der Windungen im Bereich der Enden des Coils größer ist als in dessen übriger Längserstreckung.

Dadurch soll ein stoßabsorbierender Effekt erreicht werden. Und zwar sollen die mit Abstand voneinander gewickelten äußeren Windungen axial zusammengeschoben werden, wenn beispielsweise das Coil auf sein Ende fällt. Zur Herstellung dieses Coils wird eine Wickelvorrichtung verwendet, mit einem drehend angetriebenen Wickelkern und einer Bandzuführungseinrichtung mit einem in Abstand zum Wickelkern angeordneten Bandführungskopf, wobei der Wickelkern und der Bandführungskopf horizontal parallel zur Achse des Wickelcoils gegeneinander relativverschiebar sind.

Es ist Aufgabe der Erfindung, ein Verfahren zum Aufwickeln von Elektroband zu schaffen, bei welchem möglichst lange Bandabschnitte zu einem Coil gewickelt werden, ohne daß die elektromagnetischen Eigenschaften leiden.

Gegenstand der Erfindung ist ein Verfahren zum verformgungsfreien Aufwickeln von Elektroband zu einem Coil, bei welchem das Coil als Großcoil ausgebildet ist und das von einer Bandzuführungsrichtung zugeführte Elektroband auf einen drehend angetriebenen Wickelkern aufgewickelt wird, der um ein Vielfaches breiter als das Elektroband ist, wobei die Bandzuführung einerseits und der Wickelkern andererseits parallel zur Achse des Wickelkernes gegeneinander relativverschiebbar sind und die Drehgeschwindigkeit des Wickelkernes und die axiale Relativgeschwindigkeit zwischen Wickelkern und Bandzuführung rechnergesteuert so aufeinander abgestimmt sind, daß das Elektroband in aufeinanderfolgenden, eng gewickelten Lagen oszillierend aufgewickelt wird, und wobei an den axialen Enden des Großcoils die Richtung der axialen Relativbewegung zwischen Wickelkern und Bandzuführung ebenfalls rechnergesteuert so umgesteuert wird, daß die axiale Relativgeschwindigkeit zwischen dem Wickelkern und der Bandzuführung mindestens während der letzten Umdrehung des Wickelkernes vor Einleitung der Richtungsumsteuerung an den axialen Enden des Großcoils für kurze Zeit beschleunigt wird.

Es hat sich überraschenderweise herausgestellt, daß man die oben erwähnten Zwängungen und Verformungen dadurch vermeiden kann, daß mindestens die beiden letzten benachbarten Gänge der jeweiligen Wickellage axial auseinander gezogen werden. Hierdurch erhält man vor der Einleitung der Richtungsumkehr während der letzten Umdrehung dieser Wickellage seitlich genügend Raum, in welchem sich die erforderliche, in Umfangsrichtung erstreckende elastische Säbelverformung des Bandes abspielen kann. Außerdem kann man diese elastische Säbelverformung auf einem verhältnismäßig großen Umfangbereich verteilen, so daß sich keine scharfen Knicke oder Zwängungen ergeben.

Gegenstand der Erfindung ist weiterhin ein Großcoil aus aufgewickeltem Elektroband, welches sich dadurch kennzeichnet, daß das Elektroband oszillierend in eng gewickelten Lagen verformungsfrei auf einen Wickelkern aufgewickelt ist, der um ein Vielfaches breiter als das Elektroband ist, wobei der axiale Bandabstand mindestens zwischen den beiden letzten benachbarten Gängen einer Wickellage im Endbereich des Großcoils mindestens im Umfangsbereich der Richtungsumkehr des Wickelsinnes des letzten Wickelganges gegenüber dem Bandabstand zwischen benachbarten Gängen im Längenbereich des Großcoils vergrößert ist. Dabei erstreckt sich der Bereich der Abstandsvergrößerung zweckmäßig etwa über den Umfang der jeweiligen Wickellage. Hierdurch ergibt sich jeweils im letzten Wickelgang die Möglichkeit, die für die Richtungsumkehr erforderliche elastische Säbelverformung auf einen so großen Bereich zu verteilen, daß bleibende Verformungen des Elektrobandes mit Sicherheit vermieden werden.

Weiterhin ist vorgesehen, daß der Wickelkern an beiden Enden mit Flanschen versehen ist. Diese Flansche, die für die innere Stabilität des Großcoils nicht notwendig sind, schützen das an den Stirnseiten befindliche Material des Großcoils gegen Beschädigungen von außen.

Um sehr große Bandlängen zu ermöglichen, besteht das Elektroband des Coils aus mehreren Bandabschnitten, die durch im Mikroplasma- oder Laserschweißverfahren hergestellte, verarbeitungsfähige Schweißnähte verbunden sind.

Ein Ausführungsbeispiel der Erfindung wird im folgenden anhand der Zeichnung näher erläutert. Es zeigen:
- Fig. 1: ein Coil gemäß der Erfindung mit der zugehörigen Aufwickelvorrichtung (schematisch);
- Fig. 2: eine Seitenansicht zu Fig. 1;
- Fig. 3: in ähnlicher Darstellung wie Fig. 1 eine weitere Ausführungsform der Aufwickelvorrichtung schematisch.

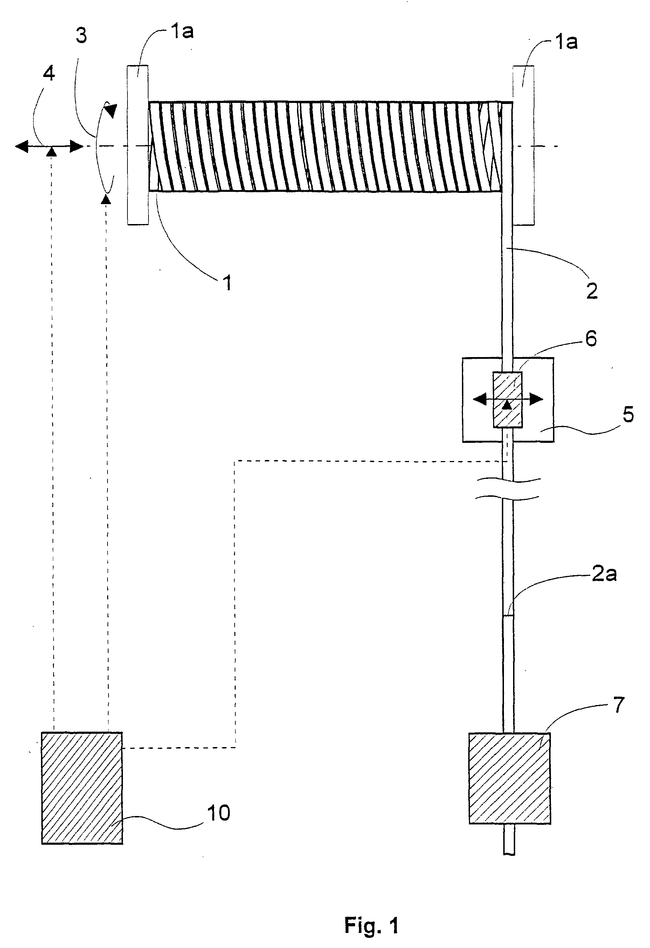

In Fig. 1 ist ein Wickelkern mit dem Bezugszeichen 1 bezeichnet. Auf diesen Wickelkern 1 ist ein Elektroband 2 aufgewickelt. Der Wickelkern 1 ist um ein Vielfaches breiter als das Elektroband 2. Das Elektroband 2 ist über die Breite des Wickelkerns 1 oszillierend in aufeinanderfolgenden Lagen dicht an dicht derart auf den Wickelkern 1 aufgewickelt, daß es über seine gesamte Länge ausschließlich Zug- und Biegespannungen im elastischen Bereich ausgesetzt ist. Das heißt mit anderen Worten, daß die Biegeradien überall mindestens so groß sind und die seitlichen Ablenkungswinkel nirgendwo so groß sind, daß sich bleibende Biegeverformungen in dem aufgewickelten Elektroband 2 ergeben. Außerdem wird beim Aufwickeln ein derart geringer Bandzug angewendet, daß sich über die gesamte Länge des aufgewickelten Elektrobandes nirgendwo Zugspannungen ergeben, die zu bleibenden Verformungen führen könnten. Aufgrund der oszillierenden Wicklung kann ein solches Elektrobandcoil ohne weiteres als Großcoil ausgebildet sein, auf welches bis zu 20 mal mehr Elektroband 2 aufgewickelt sein kann, als bei den herkömmlichen Scheibencoils. Um sehr große Bandlängen zu erzielen, besteht das zu einem Großcoil aufgewickelte Elektroband 2 aus mehreren Bandabschnitten, die durch Schweißnähte 2a miteinander verbunden sind. Die Schweißnähte 2a werden schonend im Mikroplasma- oder Laserschweißverfahren hergestellt, wodurch die Textur des Materials in der Nachbarschaft der Schweißnähte 2a nicht oder nur so wenig beeinträchtigt wird, daß das Elektroband 2 auch im Bereich der Schweißnaht 2a verarbeitungsfähig bleibt.

Der Wickelkern 1 ist seitlich an beiden Enden mit Flanschscheiben 1a versehen, die das oszillierend gewickelte Elektroband 2 von beiden Seiten her gegen Beschädigungen schützen.

Zum Aufwickeln des Elektrobandes 2 auf den Wickelkern 1 ist der Wickelkern 1 mittels eines nicht näher dargestellten Drehantriebes in Richtung des Pfeiles 3 drehend angetrieben. Während der Drehbewegung kann der Wickelkern in axialer Richtung rechnergesteuert hin- und herbewegt werden. Diese Hin- und Herbewegung ist mit dem Doppelpfeil 4 symbolisiert.

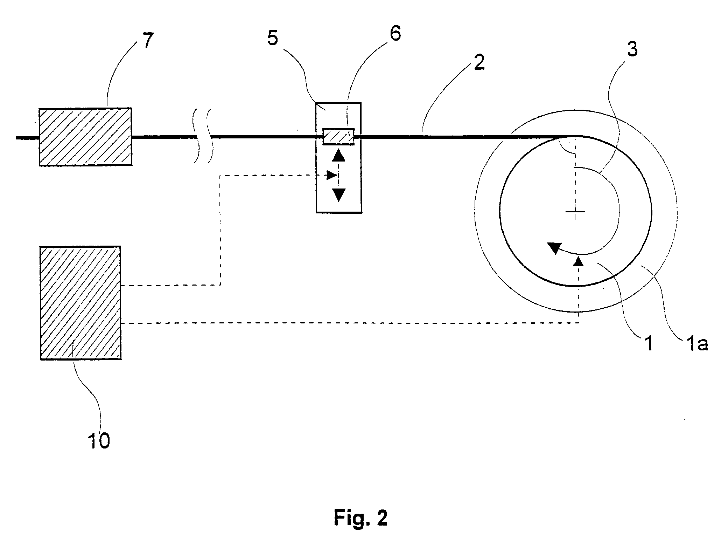

Das aufzuwickelnde Elektroband 2 ist mit ausreichendem Abstand von dem Wickelkern 1 in einer horizontalen Bandzuführung 5 möglichst umlenkungsfrei geführt. Diese Bandzuführungseinrichtung 5 weist einen in horizontaler Richtung hin- und hergehend verschiebbaren Bandführungskopf 6 auf, dessen horizontale Bewegungen in Fig. 1 durch einen Doppelpfeil symbolisiert sind. Auch diese Hin- und Herbewegung ist rechnergesteuert und mit der Hin- und Herbewegung des Wickelkernes 1 so synchronisiert, daß die sich beim Aufwickeln des Elektrobandes 2 ergebenden seitlichen Ablenkungswinkel niemals größer werden, als ein bestimmter kritischer Winkel, bei welchem das Elektroband seitlich bleibend verbogen würde. Wie weiterhin aus Fig. 2 ersichtlich ist, ist der Bandführungskopf 6 auch vertikal verstellbar. Diese vertikale Verstellmöglichkeit ist in Fig. 2 ebenfalls durch einen Doppelpfeil symbolisiert. Diese vertikale Verstellung macht es möglich, den Bandführungskopf 6 dem zunehmenden Durchmesser des Coils derart nachzuführen, daß der Abstand zwischen dem Bandführungskopf 6 und dem Anlaufpunkt des Bandes am Coil immer gleich bleibt.

Der horizontalen Bandführung 5 ist mit ausreichendem Abstand eine exakt arbeitende Bandzugregeleinrichtung 7 vorgeschaltet, welche beispielsweise als Bremsgerüst ausgebildet sein kann, welches nach Möglichkeit ohne Umlenkung oder nur mit geringer Umlenkung arbeitet. Auch diese Bandzugregeleinrichtung 7 ist rechnergesteuert und auf die Drehgeschwindigkeit des Wickelkernes 1 und die Hin- und Herbewegungen des Wickelkernes 1 und der horizontalen Bandführung 5 abgestimmt. Dadurch ist es möglich, den Bandzug immer dann zu erhöhen oder zu erniedrigen, wenn die horizontale Bandführung 5 dies im Hinblick auf den Wickelvorgang notwendig macht.

Auf diese Weise ist es möglich, den Aufwickelvorgang des Elektrobandes 2 online exakt so zu steuern, daß die oben diskutierten Bedingungen im Hinblick auf das auf dem Wickelkern 1 zum Coil aufgewickelte Elektroband 2 eingehalten werden. Die Steuerung aller Bewegungen erfolgt durch einen Verlegerechner 10.

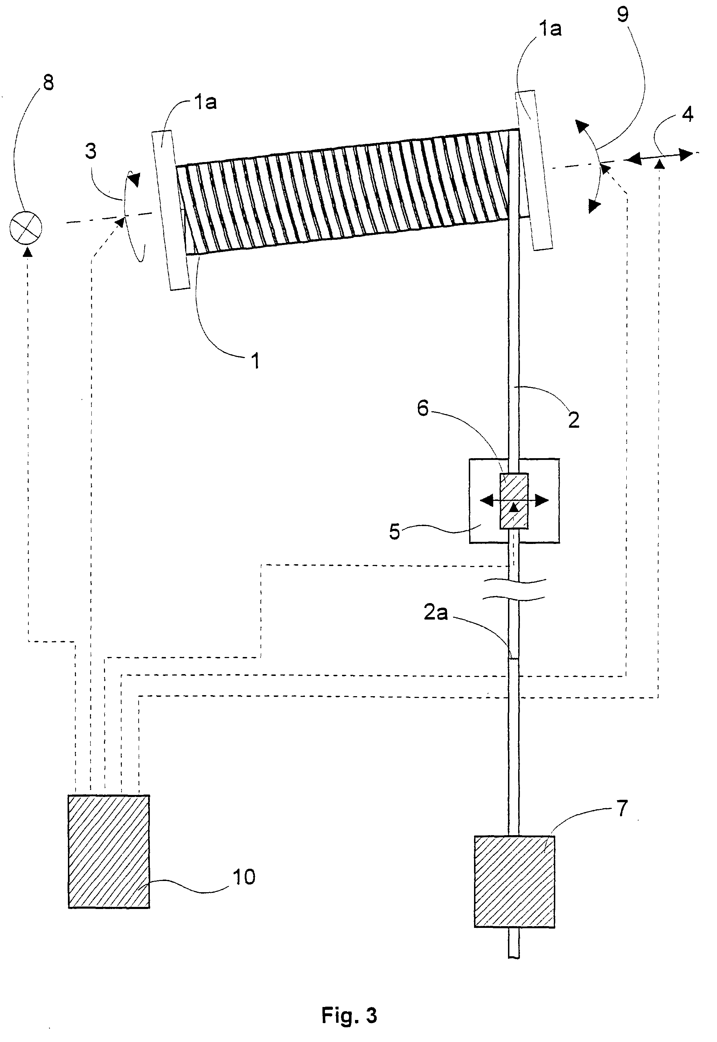

Gegebenenfalls kann, vgl. Fig. 3, der Wickelkern 1 zusätzlich um eine vertikale Achse 8 verschwenkbar gelagert sein, um einen in der senkrechten Projektion vollständig geradlinigen Übergang zwischen dem einlaufenden Elektroband 2 und dem zuletzt auf das Coil aufgewickelten Bandabschnitt zu ermöglichen. Die Schwenkbewegungen um die Achse 8 sind ebenfalls rechnergesteuert, wie durch den Doppelpfeil 9 angedeutet ist.

Wie schließlich noch aus Fig. 1 ersichtlich ist, haben die beiden benachbarten Gänge jeder Wickellage des Coils an den Enden des Coils einen größeren axialen Abstand voneinander, als die axialen Abstände zwischen benachbarten Gängen im Längenbereich des Coils. Diese größeren Abstände werden dadurch hergestellt, daß die axiale Relativgeschwindigkeit zwischen dem Wickelkern 1 und der Bandzuführungseinrichtung 6 mindestens während der letzten Umdrehung des Wickelkernes vor der Richtungsumkehr am axialen Ende des Großcoils für kurze Zeit beschleunigt wird. Hierdurch werden die benachbarten Gänge der jeweiligen Wickellagen an den Enden des Großcoils axial auseinandergezogen, wodurch in axialer Richtung ausreichend Raum geschaffen wird, um über den Umfang des Coils eine die Richtungsumkehr bewirkende elastische Säbelverformung des Elektrobandes 2 vornehmen zu können, ohne daß es zu Zwängungen oder Verbiegungen kommt. Insbesondere kann man den Bereich der Richtungsumkehr auf einen großen Umfangsbereich verteilen, ohne durch den vorangehenden Gang des Elektrobandes 2 behindert zu sein.

## Patentansprüche

1. Verfahren zum verformungsfreien Aufwickeln von Elektroband zu einem Coil,
**dadurch gekennzeichnet, daß** das Coil als Großcoil ausgebildet ist, bei welchem das von einer Bandzuführungsvorrichtung (5) zugeführte Elektroband (2) auf einen drehend angetriebenen Wickelkern (1) aufgewickelt wird, der um ein Vielfaches breiter als das Elektroband (2) ist, wobei die Bandzuführung (5) einerseits und der Wickelkern (1) andererseits parallel zur Achse des Wickelkernes (1) gegeneinander relatiwerschiebbar sind und die Drehgeschwindigkeit des Wickelkernes (1) und die axiale Relativgeschwindigkeit zwischen Wickelkern (1) und Bandzuführung (5) rechnergesteuert so aufeinander abgestimmt sind, daß das Elektroband (2) in aufeinanderfolgenden, eng gewickelten Lagen oszillierend aufgewickelt wird, und wobei an den Enden des Großcoils die Richtung der axialen Relativbewegung zwischen Wickelkern (1) und Bandzuführung (5) ebenfalls rechnergesteuert so umgesteuert wird, daß die axiale Relativgeschwindigkeit zwischen dem Wickelkern (1) und der Bandzuführung (5) mindestens während der letzten Umdrehung des Wickelkernes (1) vor Einleitung der Richtungsumsteuerung an den axialen Enden des Großcoils für kurze Zeit beschleunigt wird.

2. Coil aus aufgewickeltem Elektroband, **dadurch gekennzeichnet, daß** das Coil als Großcoil ausgebildet ist und das Elektroband (2) oszillierend in eng gewickelten Lagen verformungsfrei auf einen Wickelkern (1) aufgewickelt ist, der um ein Vielfaches breiter als das Elektroband (2) ist, wobei der axiale Bandabstand mindestens zwischen den beiden letzten benachbarten Gängen einer Wickellage im Endbereich des Großcoils mindestens im Umfangsbereich der Richtungsumkehr des Wickelsinnes des letzten Wickelganges gegenüber dem Bandabstand zwischen benachbarten Gängen im Längenbereich des Großcoils vergrößert ist.

3. Großcoil nach Anspruch 2, **dadurch gekennzeichnet, daß** der Bereich der Abstandsvergrößerung sich etwa über den Umfang der jeweiligen Wickellage erstreckt.

4. Großcoil nach Anspruch 2, **dadurch gekennzeichnet, daß** der Wickelkern (1) an beiden Enden mit Flanschen (1a) versehen ist.

5. Großcoil nach Anspruch 2, **dadurch gekennzeichnet, daß** das Elektroband (2) aus mehreren Bandabschnitten besteht, die durch im Mikroplasma- oder Laserschweißverfahren hergestellte, verarbeitungsfähige Schweißnähte (2a) verbunden sind.

## Claims

1. A process for deformation-free winding up electric strip to form a coil, **characterised in that** the coil is in the form of a big coil, in which the electric strip which is supplied by a strip feed device (5) is wound on to a winding core (1) which is driven in rotation and which is a multiple wider than the electric strip (2), wherein the strip feed (5) on the one hand and the winding core (1) on the other hand are relatively displaceable with respect to each other parallel to the axis of the winding core (1) and the speed of rotation of the winding core (1) and the axial relative speed between the winding core (1) and the strip feed (5) are matched to each other under computer control in such a way that the electric strip (2) is wound on oscillatingly in successive, closely wound layers, and wherein at the ends of the big coil the direction of the axial relative movement between the winding core (1) and the strip feed (5) is also reversed under computer control in such a way that the axial relative speed between the winding core (1) and the strip feed (5) is accelerated for a short time at least during the last revolution of the winding core (1) before initiation of the reversal in direction at the axial ends of the big coil.

2. A coil comprising wound-up electric strip **characterised in that** the coil is in the form of a big coil and the electric strip (2) is wound oscillatingly in closely wound layers in a deformation-free state on to a winding core (1) which is a multiple wider than the electric strip (2), wherein the axial strip spacing at least between the last two adjacent turns of a winding layer in the end region of the big coil at least in the peripheral region of the reversal in the direction of winding of the last winding turn is increased in relation to the strip spacing between adjacent turns in the lengthwise region of the big coil.

3. A big coil according to claim 2 **characterised in that** the region of the increase in spacing extends approximately over the periphery of the respective winding layer.

4. A big coil according to claim 2 **characterised in that** the winding core (1) is provided with flanges (1a) at both ends.

5. A big coil according to claim 2 **characterised in that** the electric strip (2) comprises a plurality of strip portions which are connected by machineable welded seams (2a) produced by a microplasma or laser welding process.

## Revendications

1. Procédé pour enrouler sans déformation une bande électrique pour former une bobine, **caractérisé en ce que** la bobine est réalisée comme bobine de grande dimension, où la bande électrique (2) amenée par un dispositif d'amenée de bande (5) est enroulée sur un noyau d'enroulement (1) entraîné en rotation qui a une largueur multiple par rapport à celle de la bande électrique (2) où l'amenée de bande (5), d'une part, et le noyau d'enroulement (1), d'autre part, sont déplaçables relativement l'un à l'autre parallèlement à l'axe du noyau d'enroulement (1) et la vitesse de rotation du noyau d'enroulement (1) et la vitesse relative axiale entre le noyau d'enroulement (1) et l'amenée de bande (5) sont accordées, par une commande par calculateur, l'une à l'autre de façon que la bande électrique (2) est enroulée d'une manière oscillante en des couches successives, roulées étroitement, et où aux extrémités de la bobine de grande dimension, la direction du déplacement relatif entre le noyau d'enroulement (1) et l'amenée de bande (5) est également changée, par commande par calculateur, de façon que la vitesse relative axiale entre le noyau d'enroulement (1) et l'amenée de bande (5) est accélérée pendant un temps court au moins pendant le dernier tour du noyau d'enroulement (1) avant l'introduction du changement de direction aux extrémités axiales de la bobine de grande dimension.

2. Bobine à partir d'une bande électrique enroulée, **caractérisée en ce que** la bobine est réalisée comme bobine de grande dimension et que la bande électrique (2) est enroulée d'une manière oscillante en couches enroulées étroitement sans déformation sur un noyau d'enroulement (1), dont la largueur représente un multiple de celle de la bande électrique (2), où l'écart de bande axial, au moins entre les deux derniers pas avoisinants d'une couche d'enroulement dans la zone d'extrémité de la bobine de grande dimension est agrandi au moins dans la zone périphérique de l'inversion de la direction du sens d'enroulement du dernier pas d'enroulement par rapport à l'écart de bande entre des pas avoisinants dans la zone de longueur de la bobine de grande dimension.

3. Bobine de grande dimension selon la revendication 2, **caractérisée en ce que** la zone de l'agrandissement de l'écart s'étend sur environ le pourtour de la couche d'enroulement respective.

4. Bobine de grande dimension selon la revendication 2, **caractérisée en ce que** le noyau d'enroulement (1) présente des brides (1a) aux deux extrémités.

5. Bobine de grande dimension selon la revendication 2, **caractérisée en ce que** la bande électrique (2) est constituée de plusieurs tronçons de bande qui sont reliés par des cordons de soudure (2a) aptes à être usinés, réalisés par des procédé de soudage à l'arc de micro-plasma ou à laser.
